Europäisches Patentamt

European Patent Office

Office européen des brevets

(11) Publication number: **0 090 021**
**B1**

# EUROPEAN PATENT SPECIFICATION

(45) Date of publication of patent specification: **24.08.88**

(51) Int. Cl.⁴: **G 01 C 15/04,** G 01 V 3/11

(21) Application number: **82903137.6**

(22) Date of filing: **07.10.82**

(86) International application number:
**PCT/DK82/00090**

(87) International publication number:
**WO 83/01306 14.04.83 Gazette 83/09**

(54) **A MARKER FOR SUBTERRENEAN MARKING AND A NOVEL APPLICATION FOR SUCH A MARKER.**

(30) Priority: **08.10.81 DK 4451/81**

(43) Date of publication of application:
**05.10.83 Bulletin 83/40**

(45) Publication of the grant of the patent:
**24.08.88 Bulletin 88/34**

(84) Designated Contracting States:
**AT BE CH DE FR LI LU NL SE**

(56) References cited:
**DE-B-1 249 416**
**US-A-3 836 842**
**US-A-4 334 227**

(73) Proprietor: **PEDERSEN, Willy Palle**
**Filippavej 37**
**DK-8270 Höjbjerg (DK)**

(72) Inventor: **PEDERSEN, Willy Palle**
**Filippavej 37**
**DK-8270 Höjbjerg (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The invention relates to a geodetic fix-point system comprising a plurality of terrestrial fixpoints marked and defined by respective fixpoint markers.

Conventional geodetic fixpoint systems comprise a plurality of fixpoint markers, which are normally large, partly buried concrete blocks placed throughout the country at locations where they do not interfere with general surface activities, such that they are non-disturbing and, themselves, protected against disturbances. Each block carries a marked fixpoint, which is of a few square millimeters only and is accurately marked on geodetic maps. Land surveyors use the fixpoints for an accurate determination of topographic points and lines, to bring the topogrpahic details into conformity with those represented on the map or vice versa, for a wide range of purposes.

The fixpoints are rather expensive to establish, and in cultivated areas there are not too many vacant places for them, so their number is kept low, i.e. they are provided with a mutual spacing of several kilometers. The surveyors have very accurate measuring instruments, whereby they can locate the said details even far away from the nearest fixpoint with a reasonable accuracy, though at longer distances the accuracy will decrease somewhat, unless several control measurements are made. The typical measuring work is carried out as a so-called triangulation, which involves the measuring out of a row of relatively small triangles, which are marked temporarily by means of sticks as the work goes on in a successive manner.

The fixpoint markers are easy to find. The surveyors in a given area know where they are, or they can be located because they are clearly marked on maps. Once the fixpoint marker has been found it is easy to find also the marked fixpoint.

The present invention departs from the consideration that the surverying work would be highly facilitated if it was possible to make use of a much larger number of fixpoint markers, and it is the purpose of the invention to provide for a fixpoint system in which the markers may be arranged relatively close to each other in a cheap and for other surface activities not inconvenient manner.

The invention is based on the finding that certain already principially known markers for subterranean use which have so far been used for a "primary marking", i.e. a marking of buried objects, will in fact be usable for a locatable virtual marking of a fixpoint on the surface with the required high accuracy for geodetic purposes.

On this background the invention is characterized in that the markers are constituted by subterranean markers of the resonant type mounted in the ground underneath the normal surface working depth thereof and are of a type operable to reveal themselves by a virtual vertical axis as searchable by surface search detector means, such that the respective fixpoints are defined by the point or small area of intersection between said axis and the surface, the markers generally being mounted with relatively small mutual spacing such that any fixpoint, when marked visually, is clearly visible from at least one or other fixpoint of the system.

The markers used are produceable and mountable at low costs, so they can be used in large numbers in a relatively cheap manner, and inasfar as they are locatable with the required accuracy even when mounted entirely underneath the normal surface working depth they will not disturb or be disturbed by normal surface activities such as ploughing. Hereby they are practically useable with a mutual spacing which is much smaller than for the conventional fixpoint markers, and in turn this means that the surveyor will not have to measure out any points which are "widely spaced" from the nearest fixpoint.

Thus, the surveyor may carry out the measuring work in a faster and more accurate manner, generally even with the use of less accurate measuring instruments. The possibility of viewing, from any fixpoint, at least one visually marked neighboring fixpoint will highly enhance the measuring accuracy and further reduce the required accuracy of the measuring instruments.

As mentioned, the conventional fixpoint markers are easy to find, because the surveyor shall only look for a large block as located at some characteristic out-of-use-location indicated on a map, while the markers used in the system according to the invention are simply invisible and are placed generally underneath surface portions "in use", such surface portions often being without details that could facilitate the finding of the markers. However, even with the system according to the invention it is possible to locate the markers in an easy manner, based e.g. on just reasonably accurate map indications, because the markers are searchable by search detector means so as to respond whenever the search detector is located inside an area of several square meters around the virtual, fixpoint defining axis of the marker. Hereby the relevant "fixpoint area" is easily locatable based on the map indication, and once the area has been located and the search detector has been placed therein the finding of the fixpoint itself will only be a matter of moving the search detector over the area until it indicates a coincidence with the virtual axis of the marker. Thus the finding of the fixpoint marker area and the fixpoint itself will be as easy in the system of the invention as in the conventional systems.

The markers themselves should of course be adapted to fulfill their purpose in the system according to the invention, i.e. they shall have to preesnt a well defined virtual axis in order to define the fixpoint within a few square millimeters of the overhead ground surface, and moreover they shall respond safely to the search frequency as transmitted by the search detector. Already known markers of the resonant type as used in practice for marking buried objects have generally been of a type comprising a large air coil of a diameter of some 40 cm contained in a flat plastic casing, which should be mounted in a horizontal position, thus requiring a considerable digging work. Moreover, the coil casing is difficult to mount exactly horizontally at the bottom of the mounting hole, and such coils are not well suited to produce a resonance field defining a sharp vertical axis that would be locatable with the required high accuracy. An improved marker type is disclosed in US—A—3,836,842, where the coil is wound on a narrow core rod of ferrite and the whole is mounted in an elongate cylindrical plastic housing which is cast about the core rod and the associated resonant circuit as comprising the coil and a capacitor. A marker of such a type is much easier to mount, e.g. in a drilled mounting hole, and to mount in a vertical position in the hole. Also, due to the ferrite core, the marker will be advantageously sensitive to the field transmitted by the search detector even when the coil has a diameter of only some 1 cm, and a marker of this type, therefore, will be well suited for use in connection with the invention.

However, the marker as known from said US—A—3,836,842 suffers from certain · drawbacks, which would make it unsuitable in the present connection because of the high accuracy requirements, which also extend to the accuracy and constancy of the resonance frequency. In the known marker the cast casing is relatively thin-walled, whereby the resonance frequency will be depending of the dielectric properties of the surroundings of the mounted marker, and for this and other reasons the disclosure of the US—A—3,836, 842 specifies that the markers have to be searched by a detector operating with a sweep-frequency transmitter signal. Apart from the associated complication of the search device this will show the disadvantage that during the search the marker will receive only a small amount of energy from the transmitter, viz. only the frequencies close to its specific resonance frequency, whereby the response effect of the marker will be rather low and therewith its effective search range rather limited.

As part of said fixpoint system according to the invention, the invention also comprises an improved marker comprising a resonance circuit including an electric coil mounted on a ferrite core rod and connected with a capacitor, these parts being encapsulated in a rigid, non-magnetic and waterproof material characterized in that the ferrite core with its associated resonance circuit is mounted in a bore in a preshaped housing member, said bore being of a diameter only slightly larger than the outer diameter of the coil and having in its wall an axial recess for receiving the capacitor which is mounted in substantially rigid connection with the coil adjacent the cylindrical outside of the ferrite core, said housing being cylindrical, elongated and having an outer diameter of at least twice the diameter of the coil and being of a material of good mechanical and dielectrical properties, said bore being entirely sealingly closed at both ends. The housing of this marker is relatively thick-walled such that standard produced markers may be mounted in surroundings of very different dielectric properties without changing their preadjusted resonance ferquency. It is also deemed important that the housings are preshaped, i.e. not provided as castings direct against the ferrite rod and the coil, as such casting may well give rise to a drift of the adjusted frequency, particularly if the casting is hot. For facilitating the mounting and adjustment of the coil on the ferrite rod it has been found advantageous to mount the required capacitor on the outside of the coil rather than at the end of the core rod, and for maintaining a thick wall of the housing as far as possible the capacitor is inserted in an axial recess in the side of the central core receiving bore in the housing. Care should be taken that the bore is sealed very effectively at both ends so that nothing over the years can intrude into the mounted marker and change the resonance frequency thereof.

As a result of these precautions it will be possible to make use of search detectors operating at a fixed frequency and producing relatively strong response signals from the markers, this being required for obtaining an easy indication of the searched fixpoints with the required high accuracy.

In the following the invention is described in more detail with reference to the drawing, in which:—

Fig. 1 is a perspective exploded view of a marker, while

Fig. 2 is a sectional view illustrating the mounting of the marker in the ground.

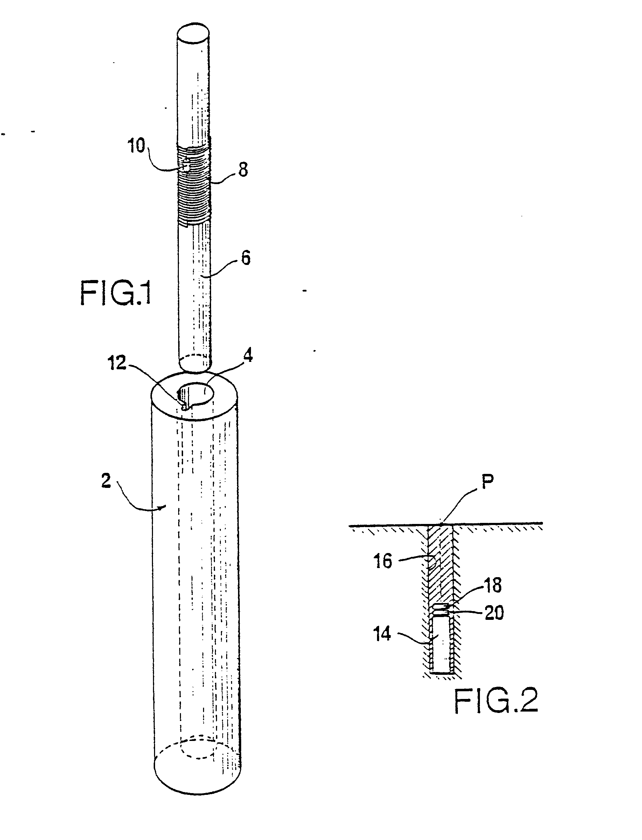

The marker as shown in Fig. 1 comprises an outer rod shaped casing 2, which is a thick walled tube of PVC or a similar material of good mechanical and dielectrical properties and of very low water absorption. The casing or tube 2 is closed bottomwise, integrally if the casing is die cast, preferably then from polyethylene, or by means of any suitable, sealing stopper material if the casing 2 is a tube member cut from a tubular extrusion of a PVC material. In both cases the casing 2 has a central channel 4, which is open at one end and is adapted to receive a ferrite rod 6, on which is wound an electric coil 8, the opposed ends of which are interconnected through a condenser 10 for forming a resonance circuit, preferably having a resonance frequency of 50—200 kHz. The coil 8 is a one layer coil, whereby generally the channel or hole 4 may show a diameter which is only some 1 mm larger than the diameter of the core rod 6. The condenser 10, of course, adds to the thickness of the rod 6, but in order to minimize the free space outside the rod 6 upon insertion thereof in the channel 4, the wall of the channel is provided with a recess 12 for receiving the condenser 10.

In the production care is taken that the remaining free space inside the channel 4 upon insertion of the rod 6 is entirely eliminated by introduction of a suitable water resistance casting material, e.g. an artificial resin. Also the top end of the channel 4 is filled out by such a material above the top end of the inserted rod 6, or the channel end or ends are in any other suitable manner closed absolutely sealingly, such that water intrusion to the immediate surroundings of the coil is positively excluded.

Thus, the coil will be present in almost everlasting immediate surroundings which will show constant and good dielectric properties. Due to the pronounced thickness of the tube 2 the coil will experience these good properties practically irrespectively of the dielectric properties of the outer surroundings of the tube 2, and thus the resonance frequency of the circuit 8, 10 will remain practically constant under all mounting conditions of the marker, which is of utmost importance in practice.

Fig. 2 shows a marker 14 mounted in a narrow and afterfilled ground hole 16. As an optional possibility it is also shown that on the top of the marker there is placed two further, short marker units 18 and 20, which represent additional sealed casings each containing a resonance circuit of some particular or selected resonance frequency for selective identification. These casings, without having any long coil core, are fully operative when placed in the axis of the ferrite core of the marker 14. Alternatively, if a specific combination of resonance frequencies is desired for a whole series of markers these markers may be produced with the different circuits located on the same core 6.

It is a specific advantage that different resonance circuits even when placed closely together do not to any disturbing degree affect the resonance frequency of each other, and in practice, therefore, the different resonance frequencies need not deviate very much from each other in order to be safely selectively detectable. The difference so far need not be more than some 5—10 kHz, which is less than the half compared with coil units of the said known type.

In a practical example the outer diameter of the casing tube 2 is 40 mm and its length 21 cm. The diameter of the ferrite rod 6 is 10 mm and its length 200 mm. The coil 8 has 90 turns in one layer, length 60 mm, and the condenser 10 has a capacity of 3,3 nF, all corresponding to a resonance frequency of 82 kHz. The ferrite rod 6 is of the long wave type as used for built-in radio aerials. Normally the lower limit of the frequency range of this material is considered to be 200 kHz, but is has been found usable for the present purpose even below 100 kHz, where search frequencies are permissible as not interfering with other signal communication.

The known markers generally have served the purpose to be found, literally, by showing the way to themselves once they have been roughly detected from above. The present marker, of course, may serve the same purpose in connection with the marking of objects to be found in the ground, but according to the said special aspect of the invention, whereby the marker is used for geodetic marking, it is important that the purpose of the marker is nothing but to mark the location of the surface point P above the marker as illustrated in Fig. 2. For official use it will be a requirement that the point P can be localized with high accuracy, even if the surface level has been moderately changed after the mounting of the marker, and experiments have proved that the marker is well suited to condition the said high accuracy when it has been accurately mounted and is searched by means of a reasonably accurately search apparatus.

There will be numerous possibilities of sophisticating the mode of operation or mode of responding of the markers. For example, the markers may contain active elements for producing specific indentification signals in response to the coil being actuated by the required characteristic frequency or otherwise by characteristic signals as produced and transmitted from above, e.g. specific pulse trains. The said active elements may be voltage supplied from a battery or from a supply circuit actuated by wireless energy radiation from above. Batteries may be charged the same way.

When the search signal is based on pulses it will be possible to produce different response signals from a passive coil circuit, e.g. by means of a frequency converter which is actuated by the initial resonance, or by actuation of a circuit for modulating the resonance signal. The circuit of the marker may even be adapted so as to be actuatable for response solely by coded actuator signals from the search apparatus. Moreover, the responding circuitry of the marker may be programmable to produce individual information, e.g. as to distance and direction to another marked point, and such programming may even be effected or reeffected from above by way of suitable wireless actuation. It will be appreciated that all these and further corresponding possibilities will need no detailed description of this place, because they will be open to the experts in the relevant field of the technology.

When the markers are used for geodetic marking they are in no way bound to be placed at neutral or protected locations, and it will thus always be possible to mount a marker at such a location, from which another marked point is visible, when temporarily marked visually, and a very important result of this is that measurements in the field can be based on the exact line of connection between the two known points without any problems with respect to the finding of the true north direction or other non-marked parameters. The marked points should not necessarily be located in any strict coordinate pattern, when only their absolute coordinates in a superior coordinate system are known.

It will be appreciated that the geodetic aspect of the invention is extremely important, because it provides for new possibilities of building up a marking system, which is much more detailed and much easier to use than the conventional systems. The main conditions for this remarkable result are that the markers are cheap in production as a standard product non-sensitive to installation in different types of immediate surroundings, easy to mount in exact positions, nonchangeable throughout many years, and responsive to search signals in a highly reliable, exact and selective manner. The described marker fulfills all these conditions, but it will be appreciated that the invention will necessarily comprise, for land marking purposes, the use of any type of marker correspondingly fulfilling all these conditions; thus, the invention will comprise, for this particular use, any resonant type maker operable to produce from a subterranean position a well defined and well localized output field adjacent the earth surface so as to enable a surface localization of the marker with high accuracy by means of a suitable search equipment.

In the foregoing specific attention has been paid to the markers as including a resonance circuit. It will be appreciated that the basic requirement is a transfer of wireless energy between a surface apparatus and the marker and that to this end the use of a resonance circuit is important for avoiding waste of energy. The markers, also named probes or "sondes", will typically be mounted at a depth of about one meter or generally between 60 cm and two meters, and especially by deep mounting it may be critical that energy waste be kept on a minimum.

It should be mentioned that the markers will be searchable not only by the already described radar devices, but also by another type of known search devices which have separate transmitter and receiver antennas for continuous operation during the search.

## Claims

1. A geodetic fixpoint system comprising a plurality of terrestrial fixpoints marked and defined by respective fixpoint markers, characterized in that the markers are constituted by subterranean markers of the resonant type mounted in the ground underneath the normal surface working depth thereof and are of a type operable to reveal themselves by a virtual vertical axis as searchable by surface search detector means, such that the respective fixpoints are defined by the point or small area of intersection between said axis and the surface, the markers generally being mounted with relatively small mutual spacing such that any fixpoint, when marked visually, is clearly visible from at least one or other fixpoint of the system.

2. A system according to claim 1, characterized in that the search detector means as belonging to the system being operable to produce and receive frequencies only very close to the nominal resonance frequency of the resonance circuit.

3. A marker for subterranean marking as part of a system according to claim 1 and 2, comprising a resonance circuit including an electric coil (8) mounted on a ferrite core rode (6) and connected with a capacitor (10) these parts being encapsulated in a rigid, non-magnetic and waterproof material, characterized in that the ferrite core (6) with its associated resonance circuit is mounted in a bore (4) in a preshaped housing member (2), said bore (4) being of a diameter only slightly larger than the outer diameter of the coil (8) and having in its wall an axial recess (12) for receiving the capacitor (10), which is mounted in substantially rigid connection with the coil (8) adjacent the cylindrical outside of the ferrite core (6), said housing (2) being cylindrical, elongated and having an outer diameter of at least twice the diameter of the coil (8) and being of a material of good mechanical and dielectrical properties, said bore (4) being entirely sealingly closed at both ends.

4. A marker according to claim 3, characterized by a separate marker capsule containing a resonance circuit of a deviating resonance frequency and being mountable topwise on the primary marker.

5. A marker according to claim 3 or 4, characterized in that the housing member consists either of an extruded tube of PVC or the like or of a die cast, monoendwise closed member of PEH or the like.

6. A marker according to claim 3, characterized in that the bore (4) is filled out by a dielectric filler material.

7. A marker according to claim 3 and containing two or more different resonance circuits and/or active elements for producing selective output signals as detectable from above.

## Patentansprüche

1. Geodätisches Festpunktsystem, versehen mit einer Vielzahl terrestrischer Festpunkte, die durch jeweilige Festpunktmarkierer markiert und definiert sind, dadurch gekennzeichnet, dass die Markierer durch unterirdische Markierer vom Resonanztyp gebildet sind, die im Erdboden unter dessen normaler Oberflächenmessstiefe angebracht sind, wobei sie so beschaffen sind, dasse sie sich durch eine virtuelle Vertikalachse erkennbar machen können, die durch Oberflächendetektormittel so ermittelt werden kann, dass die jeweiligen Festpunkte durch den Schnittpunkte oder den kleinen Schnittbereich zwischen der genannten Achse und der Oberfläche definiert sind, wobei die Markierer im allgemeinen mit verhältnismässig geringem gegenseitigem Abstand so angeordnet sind, dass jeder Festpunkt, well er visuell markiert ist, von mindestens einem oder anderen Festpunkt des Systems deutlich sichtbar ist.

2. System nach Anspruch 1, dadurch gekennzeichnet, dass die zum System gehörenden Detektormittel nur Frequenzen erzeugen und aufnehmen können, die der Resonanznennfrequenz des Resonanzkreises sehr benachbart sind.

3. Markierer für unterirdische Markierung als Teil eines Systems nach Anspruch 1 und 2, versehen mit einem Resonanzkreis mit einer elektrischen Spule (8), die an einem Ferritkernstab (6) angeordnet und mit einem Kondensator (10) verbunden ist, welche Teile in ein starres, nichtmagnetisches und wasserdichtes Material eingeschlossen sind, dadurch gekennzeichnet, dass der Ferritkern (6) mit seinem dazugehörenden Resonanzkreis in einer Bohrung (4) in einem vorgeformten Gehäuse (2) untergebracht ist, welche Bohrung (4) einen Durchmesser aufweist, der nur etwas grösser als der Aussendurchmesser der Spule (8) ist und in seiner Wand eine axiale Aussparung (12) zum Aufnehmen des Kondensators (10) aufweist, der in hauptsächlich starrer Verbindung mit der Spule (8) nahe der zylindrischen Aussenseite des Ferritkernes (6) angeordnet ist, welches Gehäuse (2) zylindrisch und langgestreckt ist, eine Aussendurchmesser von mindestens zweimal dem Durchmesser der Spule (8) aufweist und aus einem Material mit guten mechanischen und dielecktrischen Eigenschaften besteht, wobei die Bohrung (4) an beiden Enden völlig andichtend geschlossen ist.

4. Markierer nach Anspruch 3, gekennzeichnet durch eine gesonderte Markerkapsel, die einen Resonanzkreis mit einer abweichenden Resonanzfrequenz enthält und oben auf dem primären Markierer angeordnet werden kann.

5. Markierer nach Anspruch 3 oder 4, dadurch gekennzeichnet, dass das Gehäuse entweder aus einem extrudierten PVC-Rohr od.dgl. oder aus einem einseitig geschlossenen Spritzgusselement aus PEH od.dgl. besteht.

6. Markierer nach Anspruch 3, dadurch gekennzeichnet, dass die Bohrung (4) mit einem dielektrischen Füllmaterial gefüllt ist.

7. Markierer nach Anspruch 3, und versehen mit zwei oder mehreren verschiedenen Resonanzkreisen und/oder aktiven Elementen zum Erzeugen selektiver Ausgangssignale, die von oben detektierbare sind.

**Revendications**

1. Un système de points fixes comprenant une pluralité de points fixed terrestres marqués et définis par des repères de point fixe respectifs, caractérisé en ce que les repères sont constitués par des repères souterrains du type résonnant montés dans la terre au-dessous de la profondeur de sa surface de travail normale et du type discernable par un axe vertical virtuel à détecter par des moyens de détection de surface de telle sorte que les points fixes respectifs sont définis par le point ou la petite aire de recoupement entre ledit axe et la surface, les repères étant généralement montés à un espacement relativement petit de telle sorte que tout point fixe marqué visuellement est clairement visible à partir d'un ou d'un autre point fixe du système.

2. Un système selon la revendication 1, caractérisé en ce que les moyens de détection associés au système fonctionnent pour produire et recevoir seulement des frequences très près de la fréquence de résonance nominale du circuit de résonance.

3. Un repère pour repérage souterrain comme partie d'un système selon la revendication 1 et 2, comprenant un circuit de résonance comportant une bobine électrique (8) montée sur une tige à noyau de ferrite (6) et raccordée à un condensateur (10), lesdites qièces étant enfermées dans un matériau rigide, non magnétique et étanche, caractérisé en ce que le noyau de ferrite (6) avec zon circuit de résonance y associé est monté dans une forure (4) dans un membre de boîtier préfaçonné (2), ladite forure (4) ayant un diamètre seulement légèrement supérieur au diamètre exterieur de la bobine (8) et ayant dans sa paroi un enforcement axial (12) pour recevoir le condensateur (10) monté en connexion substantillement rigide à la bobine (8) près de l'extérieur cylindrique du noyau de ferrite (6), ledit boîtier (2) étant cylindrique, allongé et ayant un diamètre extérieure d'au moins deux fois le diamètre de la bobine (8) et étant d'un matériau ayant de bonnes propriétés mécaniques et diélectriques, ladite forure (4) étant fermée aux deux extrémité de façon entièrement scellante.

4. Un repère selon la revendication 3, caractérisé par un capsule de repère séparée contenant un circuit de résonance à frequence de résonance divergente et pouvant être montée avec sa tête sur le repère primaire.

5. Un repère selon la revendication 3 ou 4, caractérisé en ce que le membre de boîtier consiste en un tube extrudé de PVC ou similaire ou bien d'un membre de PEH coulé en coquille, fermé à une extrémité, ou similaire.

6. Un repère selon la revendication 3, caractérisé en ce que la forure (4) est remplie d'un matériau de remplissage diélectrique.

7. Un repère selon la revendication 3 et contenant deux ou plusieurs circuits de résonance différents et ou des éléments actifs pour produire des signaux de sortier sélectifs discernables d'en haut.

FIG.1

10

8

6

12

4

2

P

16

18

20

14

FIG.2

1